# EUROPEAN PATENT SPECIFICATION

(11) **EP 1 814 705 B1**
(45) Date of publication and mention of the grant of the patent: **10.12.2008**
(21) Application number: 05796288.8
(22) Date of filing: 13.10.2005
(51) Int. Cl.: B29C 43/18, B29C 70/80, B65D 41/04, B65D 53/04

(54) **CAP FOR CLOSING CONTAINERS AND APPARATUS FOR FORMING LINERS**
KAPPE ZUM SCHLIESSEN VON BEHÄLTERN UND VORRICHTUNG ZUR HERSTELLUNG VON AUSKLEIDUNGEN
CAPUCHON DE FERMETURE DE CONTENANTS ET DISPOSITIF DE FABRICATION DE DOUBLURE

(30) Priority: 13.10.2004 IT MO20040269; 19.04.2005 IT MO20050090
(43) Date of publication of application: 08.08.2007
(73) Proprietor: SACMI COOPERATIVA MECCANICI IMOLA SOCIETA' COOPERATIVA, 40026 Imola (BO) (IT)
(72) Inventor: ZUFFA, Zeno, 40021 Borgo Tossignano (IT); ALBONETTI, Danilo, 40026 Sasso Morelli (IT)
(74) Representative: Crugnola, Pietro
(86) International application number: PCT/IB2005/003054
(87) International publication number: WO 2006/040661

(56) References cited:
- FR-A- 1 092 529
- GB-A- 1 084 564
- JP-A- 62 135 165
- US-A- 3 705 122
- US-A- 4 496 302
- US-A- 4 776 782
- US-A- 5 839 592

## Description

The invention relates to a cap provided with a liner and which is usable for closing containers, particularly bottles, in a substantially hermetic manner. The invention furthermore relates to an apparatus for forming the liner.

Caps are known comprising a bottom wall having a circular plan shape and a side wall internally provided with fixing means comprising one or more threads or a plurality of projections functioning as cam sectors. The threads or the projections of the side wall are suitable for engaging corresponding threads or respectively projections obtained in a neck of a bottle, or of a phial or of a container.

Metal caps are furthermore known comprising a bottom wall having a circular plan shape and a deformable side wall provided with corrugations that define a plurality of teeth intended to couple the cap with an edge of the neck of the bottle. These metal caps are also called crown caps.

On the bottom wall of the known caps a liner can be provided that, in use, is arranged in contact with an edge of the neck of the bottle so as to prevent the substances contained in the bottle from escaping into the external environment and prevent the substances in the external environment from contaminating the contents of the bottle. The liner can, for example, be formed by compression-moulding by depositing a dose of plastics in fluid or semi-fluid state inside the cap and shaping the dose with a punch directly inside the cap. In this way a liner is obtained having a circular plan shape that in use engages the edge of the neck of the bottle at an active annular zone thereof.

In order to reduce the quantity of plastics necessary for forming a liner, it was decided to decrease the thickness of the liner at an internal region arranged inside the active zone. Liners were thus obtained comprising a solid central disc-shaped panel having a relatively low constant thickness, surrounded by an active annular zone having a thickness that is greater than the panel.

JP 62 135 165 A discloses a cap according to the preamble of claim 1 and an apparatus according to the preamble of claim 17.

In order to form liners of the type disclosed above, very great moulding forces are necessary. In fact, the dose is deposited in the centre of the cap and the punch has to compress the plastics constituting the dose by pushing them towards the periphery of the bottom wall so as to form the active annular zone. The less the thickness of the central panel of the liner, the greater the moulding force required to form the liner. Furthermore, as a central panel of very low thickness cools rapidly, the plastics that constitute it flow with difficulty inside the cap, which further increases the moulding force required.

For these reasons, the thickness of the central panel of the liner cannot fall below a minimum limit. In order to obtain a liner, a relatively high quantity of plastics is therefore necessary, which means high costs and grave environmental repercussions.

An object of the invention is to improve existing caps and the apparatuses for obtaining them.

A further object is to provide caps provided with a liner, in which the liner can be obtained from a relatively small quantity of material so as to decrease the cost thereof and make the environmental impact thereof less significant.

In a first aspect of the invention, a cap according to claim 1 is provided for closing a container.

In another embodiment, within said annular zone at least a zone having greater thickness and at least a further zone having lesser thickness are definable. The zone having greater thickness defines the connecting path means.

Owing to this aspect of the invention, it is possible to obtain a cap provided with a liner that can be formed with a smaller amount of material compared with the liners associated with the known caps.

In particular, the connecting path means defines, during moulding of the liner, a preferential path for the material that forms the liner. This material is normally supplied near the internal region and, through the connecting path means, it can be conveyed in a peripheral direction so as to form the annular zone. In the space defined between the annular zone and the internal region, outside the connecting path means, the thickness of the liner is reduced to zero. This enables significant quantities of material to be saved.

In this way it is possible to diminish the cost of the liner and reduce the quantity of material to be disposed of after the container has been used.

In a second aspect of the invention, an apparatus according to claim 17 is provided.

During operation, the abutting means and the surface on which the liner has to be formed are in reciprocal contact, delimiting the forming chamber in which the dose is shaped. The channelling means obtained on the internal forming means enables the dose to be directed along the connecting path means of the liner, rather than distributing the dose uniformly in the forming chamber. Lightened liners can thus be obtained having a greater thickness along the connecting path means and lesser thickness, or even no thickness, outside the connecting path means.

The invention may be better understood and implemented with reference to the attached drawings that illustrate some exemplifying and non-limitative embodiments thereof, in which:
Figure 1 is a perspective and schematic view of a cap provided with a liner;
Figure 2 schematically illustrates the cap in Figure 1 associated with a neck of a bottle;
Figure 3 is a schematic plan view of the liner in Figure 1;
Figure 4 is a schematic section taken along the plane IV-IV in Figure 3;
Figure 5 is a view like the one in Figure 3, showing a liner according to an alternative embodiment;
Figure 6 is a section like the one in Figure 4, showing a liner according to another alternative embodiment;
Figure 7 is a section like the one in Figure 4, showing a liner according to a further alternative embodiment;
Figure 8 is a section view of forming means for obtaining a liner, in an open position;
Figure 9 is a section view like the one in Figure 8, showing the forming means in a contact position with a cap inside which the liner has to be formed;
Figure 10 is a section view like the one in Figure 8, showing the forming means during a liner forming step;
Figure 11 is a section view like the one in Figure 8, showing the forming means after the liner has been completely formed;
Figure 12 shows an enlarged detail of Figure 9;
Figure 13 shows an enlarged detail of Figure 10;
Figure 14 shows an enlarged detail of Figure 11;
Figure 15 is a schematic, enlarged and fragmentary section of an alternative embodiment of forming means for obtaining a liner;
Figure 16 is a plan view of a liner for caps, according to an alternative embodiment;
Figure 17 is a schematic plan view of a cap provided with a liner, according to a further alternative embodiment that is not part of the present invention;
Figure 18 is a schematic section taken along the plane XVIII-XVIII in Figure 17, that shows the cap in Figure 17 associated with a neck of a bottle before closing;
Figure 19 is a schematic plan view like the one in Figure 17, showing a cap provided with a liner according to a still further alternative embodiment that is not part of the present invention;
Figure 20 is a section taken along the plane XX-XX in Figure 19;
Figure 21 is a longitudinal section of forming means for obtaining the liner in Figure 19, in an open position;
Figure 22 is a front view, taken along the plane XXII-XXII in Figure 21, and showing a central portion of the forming means;
Figure 23 is a section like the one in Figure 21, showing the forming means during a liner forming step.

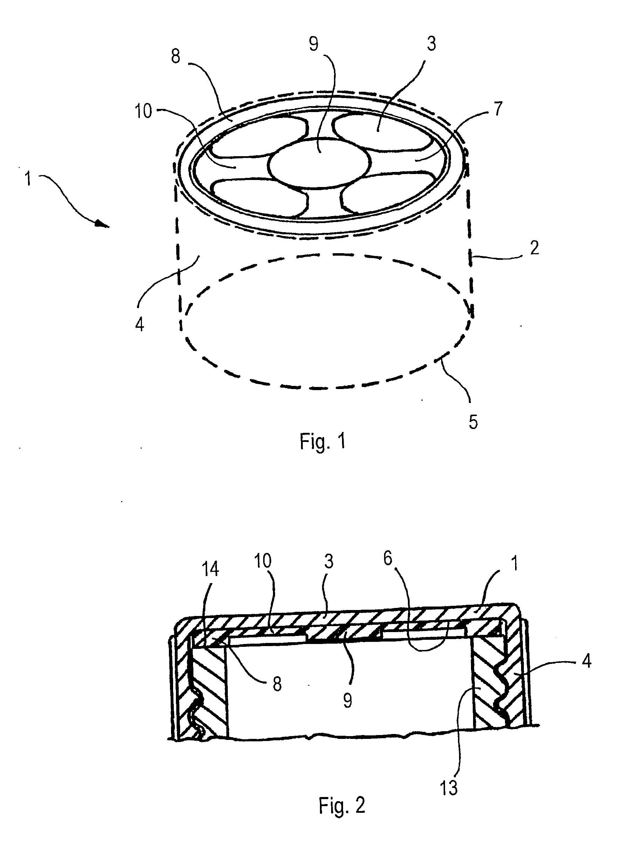

Figure 1 shows a cap 1 that can be used to close a container, such as a bottle, a phial or any other type of container. The cap 1 can be made of plastics, for example by compression or injection moulding, or of metal materials, for example aluminium.

The cap 1 comprises a cup-shaped body 2, provided with a bottom wall 3 having a substantially circular plan shape. For the sake of clarity of representation, the cup-shaped body 2 has been represented schematically in Figure 1 by a broken line. From the bottom wall 3 a substantially cylinder-shaped side wall 4 extends, which is provided with an internal thread having one or more starts, suitable for engaging a corresponding thread obtained on a neck of a bottle. In an alternative embodiment, the side wall can be internally provided with a plurality of cam projections suitable for engaging corresponding projections on the neck of the bottle or more in general of the container.

On an edge 5 of the cap 1 opposite the bottom wall 3 a tamper ring of known type, that is not shown in Figure 1, can be associated in a removable manner, which tamper ring is intended to be at least partially separated from the cup-shaped body 2 when the bottle is opened for the first time.

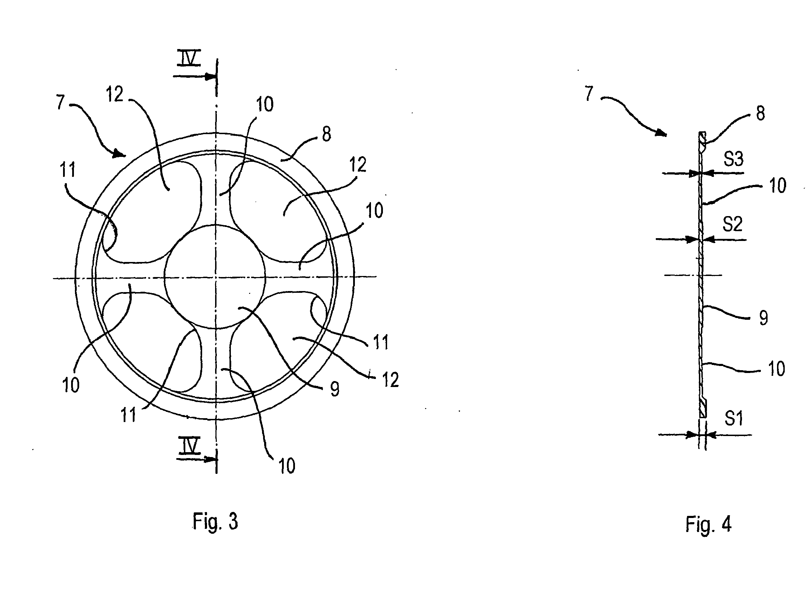

The bottom wall 3 is delimited, inside the cap 1, by a surface 6 to which a liner 7 adheres that is made of a polymeric or elastomeric material. As shown in Figures 3 and 4, the liner 7 comprises an annular zone 8, having a first thickness S1. The annular zone 8 externally delimits the liner 7 and may be annulus-shaped. The liner 7 furthermore comprises an internal region 9, which is arranged inside the annular zone 8 and has a second thickness S2 that may be less than the first thickness S1 of the annular zone 8. In the embodiment illustrated in Figure 3, the internal region 9 is substantially circle-shaped and is concentric in relation to the annular zone 8. The internal region 9 is connected to the annular zone 8 through four bridge elements 10, that in the embodiment in Figure 3 are angularly equidistant, i.e. arranged at an angular distance of 90° from one another. The bridge elements extend radially between the annular zone 8 and the internal region 9, to which they can be connected through circular connections 11.

The bridge elements 10 define respective connecting paths that connect the internal region 9 to the annular zone 8. Through these connecting paths, the elastomeric or polymeric material that forms the liner 7 can flow from the internal region 9 in a peripheral direction so as to give rise to the annular zone 8, as will be disclosed in greater detail below. Between the central region 9, the annular zone 8 and two adjacent bridge elements 10, four openings 12 are defined that enable the liner 7 to be lightened and the volume thereof to be reduced by about 30% in relation to known liners. In this way it is possible to obtain a liner 7 from a relatively low amount of elastomeric or polymeric material, thus reducing costs and environmental impact. This is particularly significant in the case of caps of relatively large dimensions, i.e. that are suitable for closing bottles or containers provided with relatively wide mouths.

The bridge elements 10 have a third thickness S3, that may be less than the first thickness S1 of the annular zone 8 and also possibly less than the second thickness S2 of the internal region 9. In particular, the third thickness S3 may be comprised between one third and one half of the first thickness S1, whereas the second thickness S2 may be comprised between one half and two thirds of the first thickness S1.

For example, the first thickness S1 may be the same as 0.9 mm, the second thickness S2 may be the same as 0.5 mm and the third thickness S3 may be the same as 0.4 mm.

In an embodiment that is not shown, it is possible to provide a smaller number of bridge elements than four, for example one, two or three, or also a number greater than four.

The bridge elements may be equidistant from one another, as shown in Figure 3, or may be at different distances from one another. They may furthermore be radial, as in the case of Figure 3, or extend in a direction that is other than the radial direction.

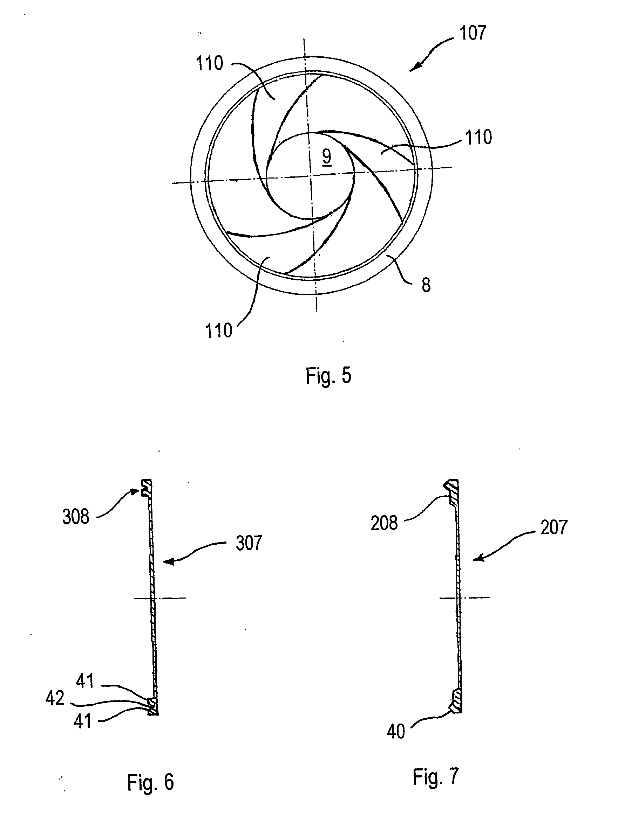

The latter case is shown in Figure 5, which illustrates a liner 107 according to an alternative embodiment, in which the parts that are common to the liner 7 shown in Figures 3 and 4 are indicated by the same reference numbers. The liner 107 is provided with a plurality of bridge elements 110 that extend between the internal region 9 and the annular zone 8 in a direction that is other than the radial direction. The bridge elements 110 in fact lead almost tangentially away from the internal region 9, which has a substantially circular plan shape, until they join the annular zone 8. In the embodiment in Figure 5, three bridge elements 110 are shown. It is nevertheless possible to provide a number of bridge elements other than three, for example one, two, four, five or more.

In operating conditions, the cap 1 is screwed onto a neck 13 of a bottle, as shown in Figure 2. The annular zone 8 is in contact with an upper edge 14 of the neck 13, so as to close the bottle in a substantially hermetic manner. It is noted that the openings 12 and the reduced thicknesses of the internal region 9 and of the bridge elements 10 or 110 do not compromise the sealing efficacy of the liner, which is entrusted only to the part of the liner in contact with the edge 14 of the bottle, i.e. to the annular zone 8, which is not substantially modified in relation to the known liners.

In the embodiments shown in the Figures 3 to 5, the thickness of the annular zone is substantially constant, equal to the value S1. Owing to this geometry, the corresponding liners exert a substantially frontal sealing action, as shown in Figure 2.

When it is nevertheless desired to close bottles or containers that are filled with substances at a pressure greater than atmospheric pressure, it may be necessary to resort to annular zones provided with other shapes that are able to ensure a more efficient seal. For example, Figure 7 shows a liner 207 provided with an annular zone 208 comprising a lip 40 that enables a lateral sealing action to be exerted when it is arranged in contact with an edge of a bottle. Figure 6, on the other hand, shows a liner 307 comprising an annular zone 308 provided with two lips 41, separated by a notch 42. The edge of the bottle engages in the notch 42, which ensures a frontal seal. The two lips 41, on the other hand, ensure a lateral seal on both sides of the notch 42 in such a way that, even if the plastics constituting the liner 307 should be deformed at the notch 42 due to the pressure inside the bottle, the lips 41 would prevent the substances contained inside the bottle from escaping into the external environment.

The shapes of the previously disclosed liners prevent, even in the presence of internal pressure, the liquid and/or gaseous substances contained in the bottle from being able to escape into the external environment or any polluting substances in the external environment from being able to contaminate the contents of the bottle, simultaneously permitting reduced consumption of plastics.

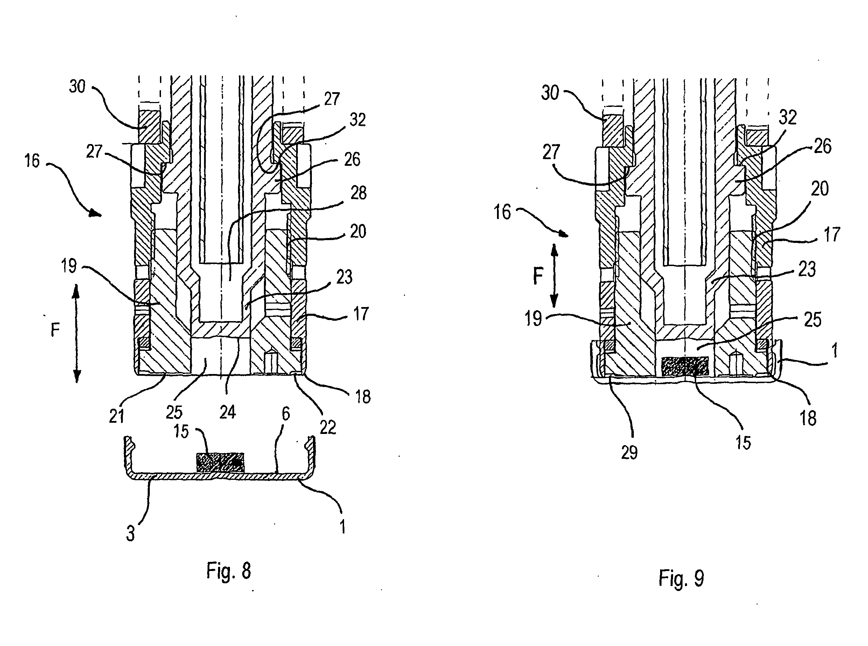

The liners of the previously disclosed type can be formed by compression-moulding of a dose 15 of plastics in fluid or semifluid state, as shown in Figures 8 to 14. The dose 15 is deposited directly inside the cap 1, supported through supporting means that is not shown in such a way that the surface 6 of the bottom wall 3 faces upwards. The supporting means is linearly movable in a moulding direction F so as to move towards, and/or away from, forming means comprising a punch 16 arranged above the cap 1. The punch 16 comprises a sleeve 17 provided with an abutting end 18 suitable for coming into contact with the surface 6 of the bottom wall 3. Inside the sleeve 17, a tubular element 19 is arranged that is screwed to the sleeve 17 at a threaded zone 20. At a lower end of the tubular element 19 channelling means is obtained comprising four channels 21 suitable for forming the bridge elements of the liner. The channels 21 communicate with a circular groove 22, which is defined between the sleeve 17 and the tubular element 19 outside the channels 21 and is suitable for obtaining the annular zone of the liner.

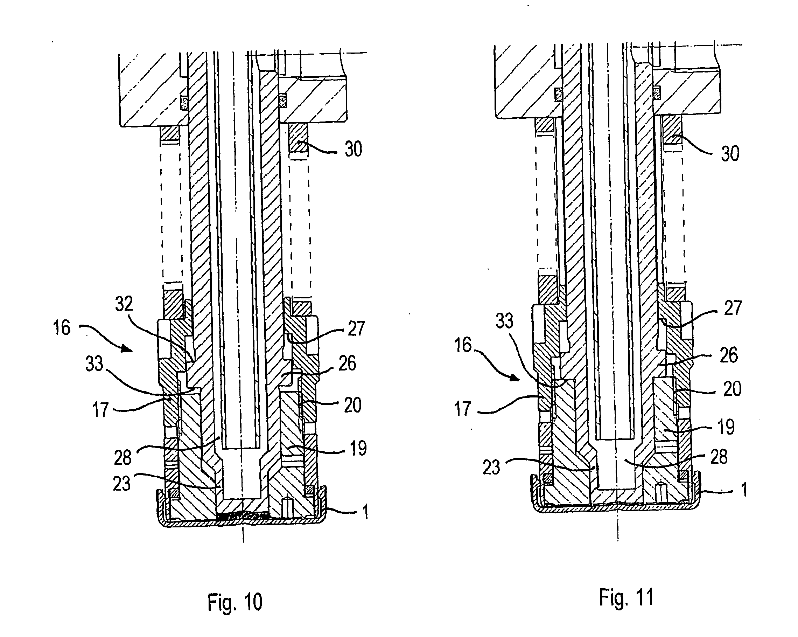

The punch 16 also comprises an internal element 23 surrounded by the tubular element 19 and provided below with a shaping surface 24 suitable for obtaining the internal region of the liner. The tubular element 19 and the sleeve 17 are linearly movable in the moulding direction F between a first configuration shown in Figure 8 and a second configuration shown in Figure 11. In the first configuration, the tubular element 19 and the sleeve 17 are arranged in an advanced position in relation to the internal element 23 so as to define in the punch 16 a cavity 25 with dimensions such as to house a dose 15. The cavity 25 is defined by the shaping surface 24 and by the tubular element 19. The sleeve 17 and the tubular element 19 are kept in the first configuration by elastic means, comprising for example a spring 30 acting on the sleeve 17. The spring 30 pushes an abutting surface 27 provided on the sleeve 17 into contact with an upper surface 32 of a projection 26 obtained on the internal element 23.

The punch 16 furthermore comprises a circuit 28 obtained in the internal element 23 and possibly also extending to the tubular element 19, in which a cooling fluid can circulate to cool the liner that has just been formed.

During operation, a cap 1 is positioned on the supporting means, in a position that is initially distanced from the punch 16. As shown in Figure 8, at the centre of the cap 1 a dose 15 is then deposited. The dose 15 can be removed from an extruder that is not shown and taken inside the cap 1 according to known methods, as normally occurs in compression-moulding techniques. Alternatively, the dose can be deposited in the cap 1 by an injector arranged, for example, in the centre of the punch 16, or outside it. In this case, liners are said to be obtained by compression-injection moulding techniques. The doses removed from an extruder normally have higher viscosity than those dispensed by an injector, which are in an almost liquid state. The supply of the dose by injection is particularly suitable for caps of relatively large dimensions. Owing to their low viscosity, the injected plastics flow better inside the forming means and also reach zones far from the injection point relatively easily. Nevertheless, once the dose has been deposited in the cap, the forming methods are completely similar, both for the extruded doses and for the injected doses.

When the dose 15 is deposited in the cap 1, the sleeve 17 and the tubular element 19 are in the first configuration, so as to define on the punch 16 the cavity 25 for housing the dose 15.

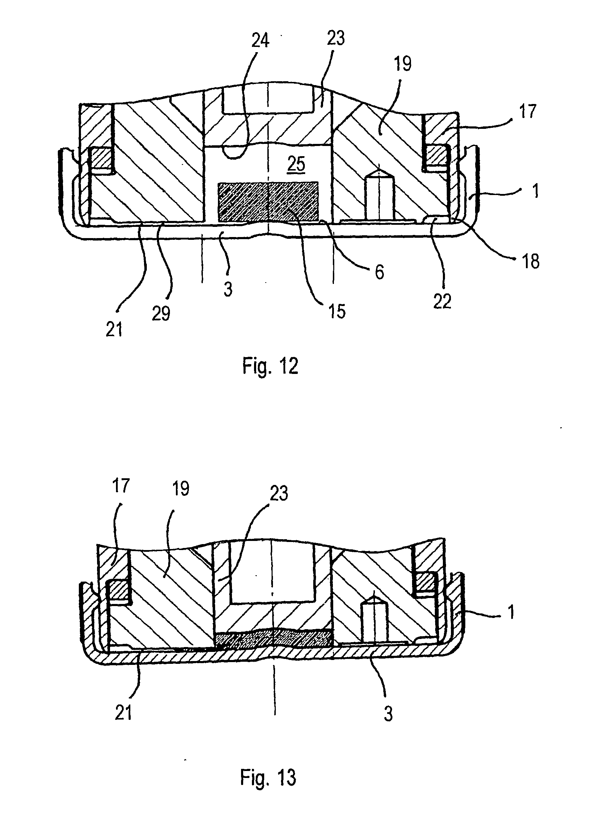

Subsequently, as shown in Figure 9, the cap 1 is moved towards the punch 16 until the surface 6 of the bottom wall 3 is brought into contact with the abutting end 18 of the sleeve 17 and with the tubular element 19. A forming chamber 29 that is more visible in Figure 12 is thus defined between the punch 16 and the cap 1, which forming chamber 29 is delimited above by the tubular element 19 and by the internal element 23, delimited below by the bottom wall 3 of the cap 1 and delimited laterally by the abutting end 18 of the sleeve 17. The spring 30, by acting on the sleeve 17, presses the sleeve 17 and the tubular element 19 fixed thereto against the bottom wall 3 of the cap 1 to prevent the plastics from escaping from the forming chamber 29.

In this step, the sleeve 17 and the tubular element 19 are still arranged in an advanced position in relation to the internal element 23, so as to define on the punch 16 the cavity 25 communicating with the forming chamber 29. The cavity 25 encloses a greater volume than the volume of the dose 15, which, despite being housed in the cavity 25, has not yet interacted with the punch 16.

The cap 1 is pushed further, by the respective supporting means, to the internal element 23. The sleeve 17 and the tubular element 19 move in the moulding direction F together with the cap 1, compressing the spring 30, whilst the internal element 23 remains in a fixed position. The dimensions of the cavity 25 are thus reduced progressively and the internal element 23 starts to compress the dose 15, which, as shown in Figure 10, first fills the entire cavity 25 and then starts to flow along the channels 21 obtained in the tubular element 19, moving to the abutting end 18 of the sleeve 17. This situation is shown in detail in Figure 13, in which the channels 21 are partially filled with the plastics constituting the dose 15.

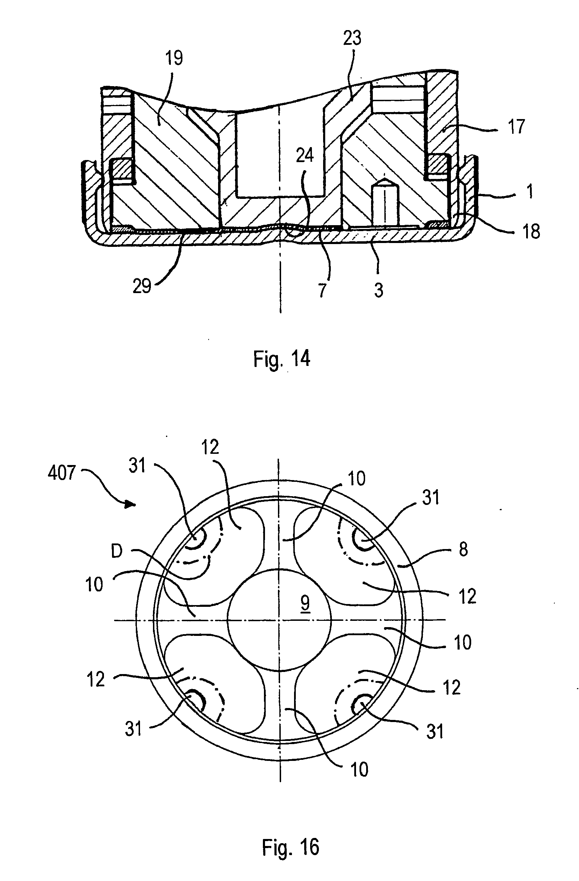

The sleeve 17 and the tubular element 19 pushed by the supporting means of the cap 1 continue to rise in relation to the internal element 23 until they reach the configuration shown in Figure 11, in which the projection 26 is in contact, at a lower surface 33 thereof, with the tubular element 19. In this configuration, as shown in Figure 14, the shaping surface 24 of the internal element 23 is slightly retracted in relation to the tubular element 19, so as to form the internal region of the liner. The plastics have completely filled the channels 21, which have given rise to the bridge elements, and have thus reached the groove 22, in which the annular zone of the liner is formed. The abutting end 18 is shaped in such a way as to prevent the plastics from flowing outside the sleeve 17, reaching undesired zones of the cap 1. The punch 16 remains in contact with the liner for a period of time that is sufficient to ensure the stabilization and cooling thereof owing to the cooling fluid circulating inside the circuit 28. On the sleeve 17 and on the tubular element 19 venting means is obtained that is not shown, which venting means enables the air initially contained in the forming chamber 29 to be evacuated.

Subsequently, the cap 1 is moved away from the punch 16 and removed from the supporting means in a known manner.

If the cap 1 is made of plastics, the liner remains attached to the bottom wall 3 due to the chemical affinity between the material constituting the cap 1 and the material constituting the liner. If, on the other hand, the cap 1 is made of metal, suitable lacquers are applied to the bottom wall 3 that enable the liner to adhere to the cap 1.

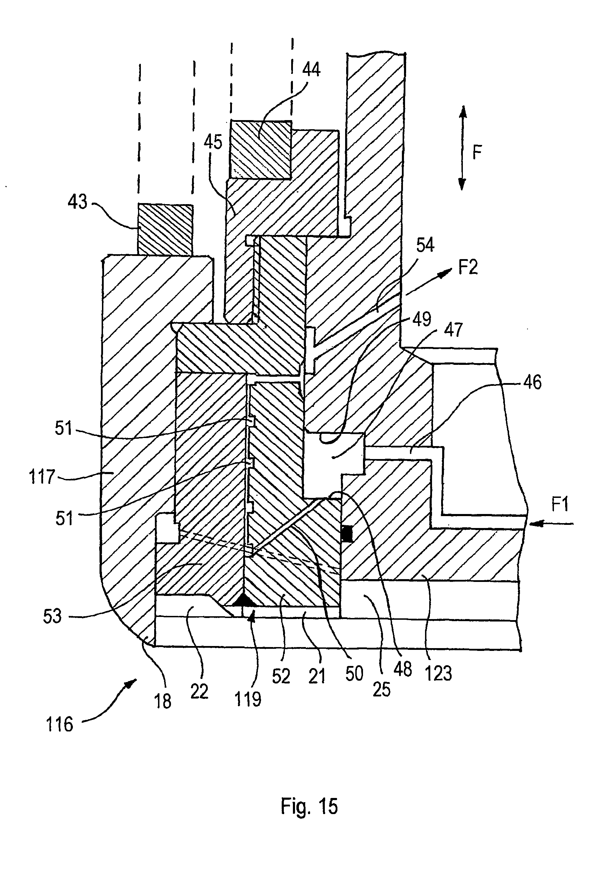

Figure 15 shows an alternative embodiment of the forming means, comprising a punch 116 provided with a sleeve 117 and with a tubular element 119 that are independent of each another. In particular, the tubular element 119 is slidable inside the sleeve 117 in the moulding direction F. On the sleeve 117 first elastic means acts comprising a first spring 43 provided with relatively low rigidity. Second elastic means, comprising a second spring 44, on the other hand, acts on a ring 45 screwed on the tubular element 119. The second spring 44 is more rigid than the first spring 43. Both the first spring 43 and the second spring 44 are mounted in such a way as to push respectively the sleeve 117 and the tubular element 119 towards the cap, i.e. in an advanced position in relation to the internal element 123.

The punch 116 enables liners to be formed that are of higher quality than those obtainable with the forming means shown in Figures 8 to 14. The second spring 44, owing to the relatively great rigidity thereof, in fact ensures, during moulding, that the tubular element 119 remains in contact with the surface 6 of the bottom wall of the cap. In this way, the plastics are prevented from escaping laterally in relation to the channels 21 and moving towards the openings 12. On the other hand, the first spring 43, owing to the great compliance thereof, enables the abutting end 18 to be maintained in contact with the surface 6 of the cap without exerting excessive forces that could superficially damage the bottom wall of the cap, especially if the wall is made of a soft material such as, for example, aluminium and/or is provided with reduced thickness. Furthermore, having made the sleeve 117 independent of the tubular element 119 enables the position of the sleeve 117 to be adapted to caps having dimensions that vary slightly between one cap and another, without affecting the position of the tubular element 119. It should be noted in this regard that the dimensional errors in the caps are normally concentrated in areas of greater diameter, i.e. precisely where the sleeve 117 acts.

Furthermore, having made the sleeve 117 independent of the tubular element 119 to a certain extent enables any variations in weight between a dose and the next one to be compensated. In fact, owing to the first spring 43, the sleeve 117 remains in contact with the cap even if a dose of weight greater than the theoretical weight is inserted into the cap. This is possible, despite the low rigidity of the first spring 43, because the plastics constituting the dose do not exert axial forces on the sleeve 17, i.e. in the moulding direction F.

The punch in Figure 15 is furthermore provided with a cooling circuit that enables not only the internal element 123 but also the tubular element 119 to be cooled. This configuration is particularly suitable for caps having a relatively large diameter, in which caps the annular zone of the liner, in which a significant quantity of plastics is present, is relatively far from the internal region, and could be poorly cooled if the cooling circuit extended only into the internal element 123.

In the embodiment in Figure 15, inside the internal element 123 a plurality of inlet conduits 46 are obtained, only one of which has been shown. By means of the inlet conduits 46 a cooling fluid is conveyed inside an accumulating zone 47 defined between the internal element 123 and the tubular element 119, as indicated by the arrow F1. The accumulating zone 47 is also delimited by a first wall 48 and by a second wall 49, obtained respectively on the tubular element 119 and on the internal element 123. The first wall 48 and the second wall 49 extend transversely to the moulding direction F and, in the particular case shown in Figure 15, are orthogonal to this direction.

From the accumulating zone 47, the cooling fluid passes into a plurality of intermediate conduits 50, only one of which is shown in Figure 15, and thus reaches a plurality of cooling conduits 51. In order to obtain the cooling conduits 51 inside the tubular element 119, the latter can be made of two parts: an internal part 52 and an external part 53, joined together, for example, by welding. The cooling conduits 51 can be defined by a plurality of helicoidal grooves formed on the internal part 52 that are equidistant and communicate between one another, converging upwards in a single circumferential groove that is orthogonal to the moulding direction F. In this way, uniform temperatures of the forming means can be obtained.

After passing through the cooling conduits 51, the cooling fluid reaches a plurality of outlet conduits 54 obtained in the internal element 123, only one of which is shown in Figure 15. The cooling fluid then leaves the punch 116, as shown by the arrow F2.

In an embodiment that is not shown, the tubular element 119 inside which the conduits for the cooling fluid are obtained can be made of a single component.

During operation, when the tubular element 119 is pushed by the cap in such a way as to compress the second spring 44, the first wall 48 approaches the second wall 49. As a result, the volume of the accumulating zone 47 decreases, producing overpressure in the cooling fluid contained therein. This overpressure spreads inside the cooling circuit and is exhausted when the liner has been formed and the tubular element 119, pushed by the second spring 44, moves away from the internal element 123, thus increasing the volume of the accumulating zone 47.

Pulse cooling is thus achieved that has greater efficiency than a cooling system in which the pressure of the cooling fluid is kept constant. It should be noted that, in the circuit in Figure 15, pulse cooling occurs without having to resort to an external pump that periodically pressurises the fluid. In order to generate overpressure inside the circuit at regular intervals, the mutual movement is exploited of two portions of the forming means, i.e. the internal element 123 and the tubular element 119, which move in relation to one another to form the desired object, in this case a liner. A pulse cooling system can also be envisaged in the punch 16 shown in Figures 8 to 14, i.e. also when the sleeve is coupled with the tubular element. Vice versa, it is possible to make a punch provided with a sleeve and with a movable tubular element that are movable independently of one another even in the absence of a pulse cooling system.

With given types of plastics, defects may form at the points of the annular zone in which plastics coming from two adjacent channels 21 join. In order to eliminate these defects, it is possible to increase the number of channels on the tubular element 19, or adopt a liner 407 according to an alternative embodiment shown in Figure 16.

The liner 407 differs from the previously disclosed liners because it comprises, inside the annular zone 8, four appendages 31 that project inside the openings 12 in an intermediate position between two adjacent bridge elements 10. The appendages 31 are formed by the punch 16 within corresponding seats obtained on the tubular element 19. These seats communicate with the groove 22 and are filled with two flows of plastics coming from two adjacent channels 21. These flows no longer weld together along the annular zone 8, but rather at the appendages 31 in which any defects are concentrated that are due to non-perfect union of the opposing flows of plastics. These defects do not compromise the correct operation of the liner 407, inasmuch as they are concentrated in a non-active zone that plays no role in hermetically closing the bottle.

In particular, in the appendages 31 quantities of plastics accumulate, together with air that could also be included in the plastics. In the absence of the appendages 31, any residual air could accumulate in the annular zone, compromising the sealing capacity of the liner.

In order to enable the air to leave the appendages 31, it is possible to provide, on the punch, inserts in porous material in a position adjacent to the seats intended to form the appendages 31. In particular, it is possible to provide a porous insert above each seat, the porous insert having a plan dimension D that is greater than the extent of the appendages 31, as shown in Figure 16 by a dash-dot line. Each porous insert can communicate with the external environment through a corresponding hole in such a way as to enable the air to escape from the appendages 31.

Besides acting as a vent for air and any other defects contained in the plastics, the appendages 31 also ensure that the plastics completely fill the annular zone of the liner.

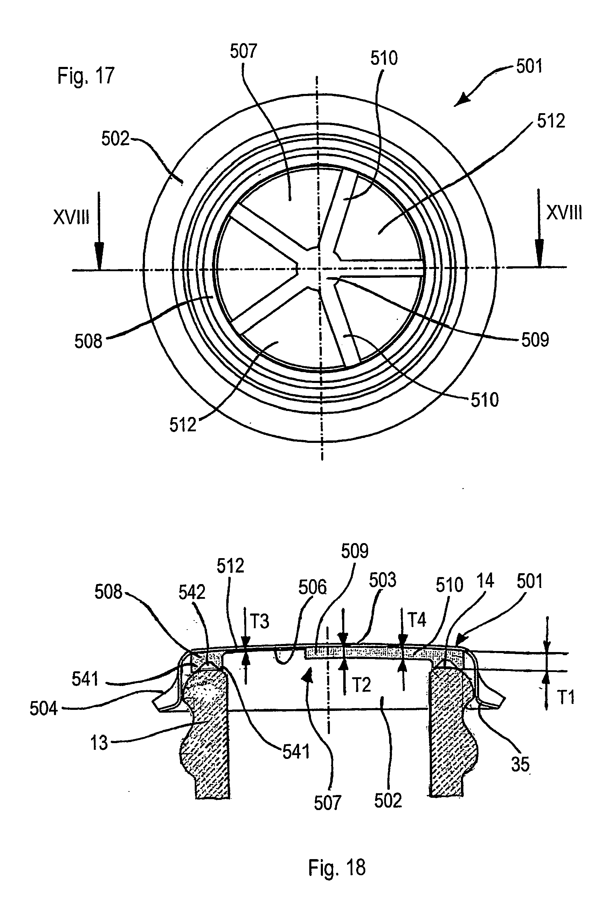

Figures 17 and 18 show a cap according to an alternative embodiment that is not part of the present invention, i.e. a crown cap 501 provided with a cup-shaped body 502 that can be of steel, possibly tin-plated and/or chromed, or in aluminium or in stainless steel.

The cup-shaped body 502 comprises a bottom wall 503 having a substantially circular plan shape. From the bottom wall 503 a side wall 504 extends, provided with a plurality of teeth 35 shown in Figure 18 and suitable for engaging in a known manner a corresponding edge of a neck of a bottle.

The bottom wall 503 is delimited, inside the crown cap 501, by a surface 506 to which a liner 507 adheres that is made of polymeric or elastomeric material. As shown in Figures 17 and 18, the liner 507 comprises an annular zone 508, having a first thickness T1. The annular zone 508 externally delimits the liner 507 and may be annulus-shaped. The liner 507 furthermore comprises an internal region 509, arranged inside the annular zone 508 and having a second thickness T2, that may be less than the first thickness T1 of the annular zone 508. In the embodiment shown in Figure 17, the internal region 509 is substantially circle-shaped and is concentric in relation to the annular zone 508. The internal region 509 is connected to the annular zone 508 through a plurality of ribs 510 that can be angularly equidistant. In particular, in the embodiment in Figure 17 five ribs 510 are provided that are arranged at an angular distance of approximately 72° from one another. The ribs 510 extend radially between the annular zone 508 and the internal region 509. Between the internal region 509, the annular zone 508 and two adjacent ribs 510 a plurality of panels 512 are defined having a third thickness T3 that is less than the first thickness T1 and the second thickness T2. The panels 512 enable the liner 507 to be lightened and the volume thereof to be significantly reduced, for example by approximately 10% in relation to known liners. In this way, it is possible to obtain a liner 507 from a relatively small quantity of elastomeric or polymeric material, thereby reducing costs and environmental impact. The ribs 510 have a fourth thickness T4 that may be less than the first thickness T1 of the annular zone 508 and be equal to or greater than the second thickness T2 of the internal region 509.

In an embodiment that is not shown, it is possible to provide a smaller number of ribs than five, for example three or four, or also more than five.

The ribs 510 can be equidistant from one another, as shown in Figure 17, or can be at different distances from one another. They can also be radial, as in the case of Figure 17, or extend in a direction other than the radial direction.

The ribs 512 define in the liner 507 a plurality of connecting paths that join the central region 509 to the annular zone 508. These paths enable the material that constitutes the liner 507 to flow from the central region 509 to the annular zone 508 when the liner 507 is formed.

In operating conditions, the crown cap 501 is positioned on the neck 13 of a bottle, as shown in Figure 18. The annular zone 508 is in contact with an upper edge 14 of the neck 13. During closure, the pressure exerted by a capping machine on the crown cap 501 deforms the annular zone 508, which adopts the shape of the upper edge 14 so as to close the bottle in a substantially hermetic manner. It is noted that the panels 12, albeit having a relatively low thickness, do not compromise the sealing efficacy of the liner 507, which is entrusted only to the part of the liner 507 in contact with the edge 14 of the bottle, i.e. to the annular zone 508, which annular zone 508 has not been substantially modified in relation to known liners.

In the embodiment shown in Figures 17 and 18, the annular zone 508 comprises two lips 41 separated by a notch 42. This geometry, as already disclosed above, is particularly suitable for closing bottles and containers that are filled with substances at a pressure greater than atmospheric pressure, as it is able to ensure a more efficient seal compared with liners with an annular zone having a rectangular cross section.

In an embodiment that is not shown, the liner 507 can be provided with an annular zone having a rectangular cross section of the type shown in Figure 4, or comprising a single lip, similarly to what is shown in Figure 7.

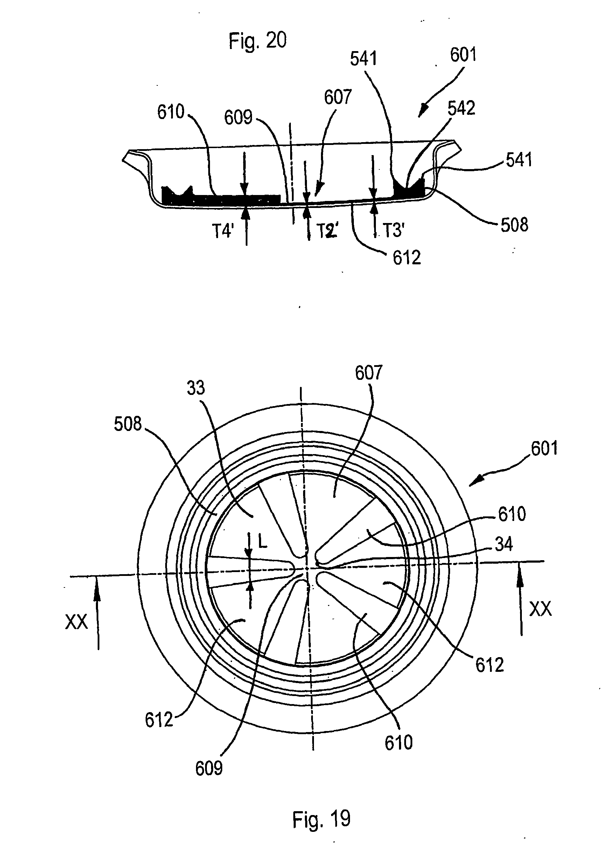

Figures 19 and 20 show a crown cap 601 that is not part of the present invention provided with a liner 607 that differs from the one shown in Figures 17 and 18 through the features that will be disclosed below. The parts of the liner 607 that are the same as those of the liner 507 shown in Figures 17 and 18 are indicated by the same reference numbers used in Figures 17 and 18 and are not disclosed again in detail.

The liner 607 is provided with a central region 609 having a thickness T2' that is less than a further thickness T4' of the ribs 610. In particular, the thickness T2' of the central region 609 is the same as a still further thickness T3' of the panels 612. In this case, the panels 612 and the central region 609 define a substantially uniform bottom 33 of the liner 607. From the bottom 33 the ribs 610 protrude.

The ribs 610 are provided, near the central region 609, with respective rounded ends 34 and extend radially until they join the annular zone 508. In an embodiment that is not shown the ribs 610 can extend in a non-radial direction.

Also in the embodiment in Figures 19 and 20, the ribs 610 define a plurality of connecting paths that extend between the central region 609 and the annular zone 508 to enable the material constituting the liner to flow to the annular zone 508.

As shown in Figure 19, each rib 610 has a width L that progressively increases moving from the central region 609 to the annular zone 508. This promotes flowing of the material constituting the liner along the connecting paths defined by the ribs 610, when the liner 607 is moulded. This effect can be enhanced by using ribs 610 that, instead of having a substantially constant further thickness T4' as shown in Figure 20, have a thickness that gradually increases the closer the annular zone 508 is approached.

In an embodiment that is not shown, the ribs 610 may have a substantially constant width L.

It is opposable to use liners of the types shown in Figures 17 to 20 not only in combination with crown caps but also in combination with caps made of metallic or polymeric materials, which caps are provided internally with threads or projections.

The liners of the type shown in Figures 17 to 20 can also be used on caps of small dimensions and are particularly cheap to manufacture because no particular precision is required to delimit the ribs 510 or 610 from the panels 512 or 612. Furthermore, the geometries shown in Figures 17 to 20 enable the liners to be lightened and the volume of material to be reduced that is necessary for manufacturing them compared with known liners.

The liners shown in Figures 17 to 20 can be formed by compression-moulding of a dose 15 of plastics in fluid or semifluid state, in a manner that is very similar to what has been previously disclosed with reference to Figures 3 to 5.

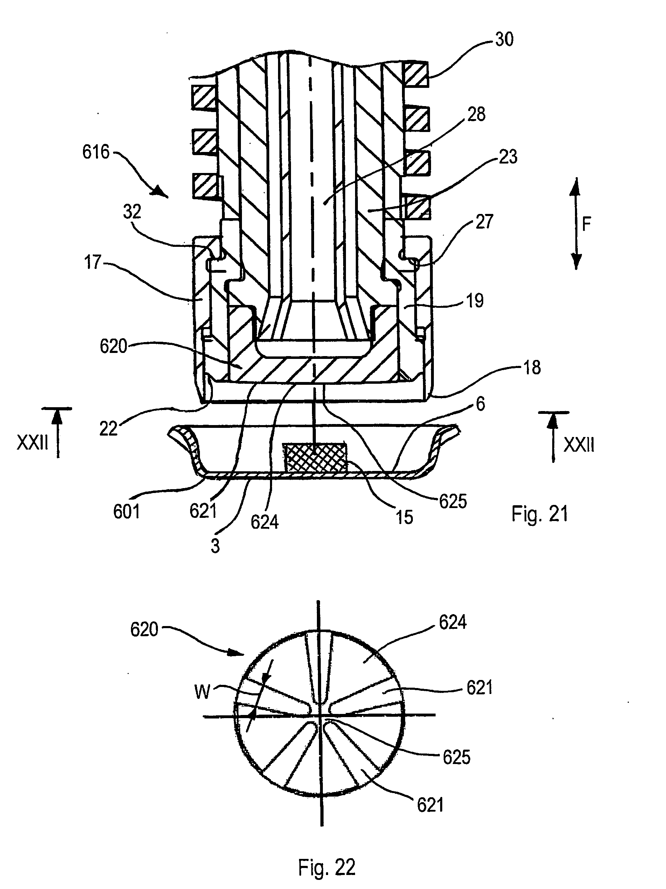

In particular, Figure 21 shows forming means for forming inside the crown cap 601 a liner 607 of the type shown in Figures 19 and 20.

The forming means comprises a punch 616 arranged above the crown cap 601, which is supported by supporting means that is not shown that is linearly movable in the moulding direction F.

The punch 616 comprises a sleeve 17 provided with an abutting end 18 suitable for coming into contact with the surface 6 of the bottom wall 3 of the crown cap 601. Inside the sleeve 17 internal forming means is arranged that comprises a tubular element 19 inserted into the sleeve 17 and a mould or central forming element 620 carried by an internal element 23 and inserted inside the tubular element 19.

The tubular element 19 has a circular groove 22 having a shape suitable for obtaining the annular zone 508 of the liner 607. The circular groove 22 is defined between the tubular element 19 and the sleeve 17. The central forming element 620 comprises a lower end provided with a forming surface624 in which channelling means is obtained comprising a plurality of channels 621 suitable for forming the ribs 610 of the liner 607. The channels 621 communicate with the circular groove 22.

As shown in Figure 22, the forming surface 624 of the central forming element 620 comprises five channels 621 having a diverging plan shape. In other words, the channels 621 are provided with a width W that increases moving from the centre to the periphery of the central forming element 620.

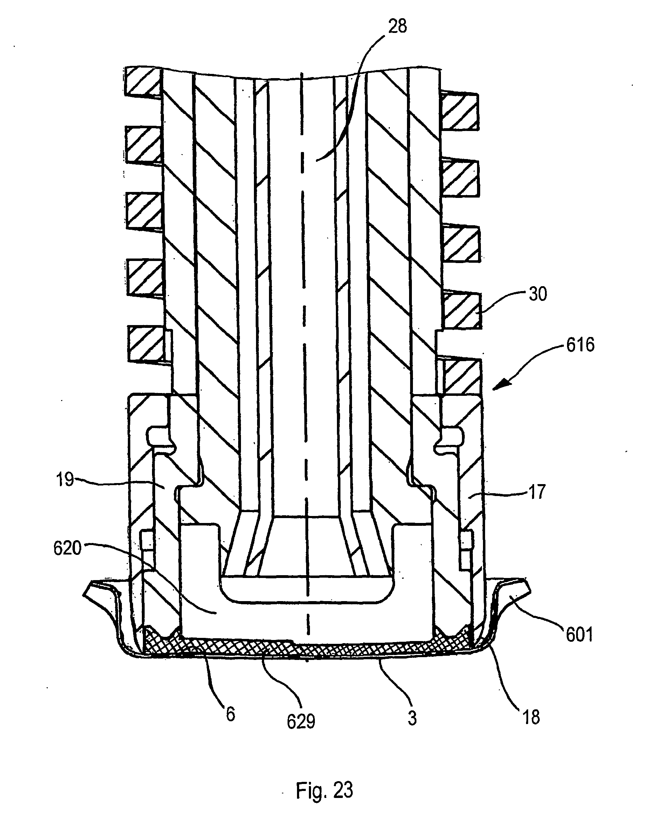

Furthermore, as visible in Figures 21 and 23, the channels 621 also have a diverging section shape. In other words, the depth of the channels 621 is not constant but increases progressively moving from the centre to the periphery of the central forming element 620. However, different configurations of the channels 621 are also possible, which channels 621, moving from a central zone 625 of the central forming element 620 to the circular groove 22, may also have converging sections and a diverging plan shape, or converging sections and a converging plan shape or diverging sections and a converging plan shape.

Consequently, the ribs 610 can have a converging or diverging section and a converging or diverging plan shape.

Furthermore, as for the ribs 610, the channels 621 may be equidistant from one another, as shown in Figure 22, or may be at different distances from one another, and can be radial, as in the case of Figure 22, or extend in a direction that is different from the radial direction with various plan shapes, for example a circular arch shape, a spiral shape or other shape.

The central zone 625 of the central forming element 620 is suitable for forming the internal region 609 of the liner 607, the thickness T2' of which is defined by the depth of the central zone 625.

As shown in Figure 21, the dose 15, coming from an extruder or from an injector, is deposited on the bottom wall 603 when the crown cap 601, supported by the supporting means, is distanced from the punch 616. In this position, the spring 30 acts on the sleeve 17 and pushes the sleeve 17 to an advanced position in relation to the tubular element 19 and to the central forming element 620. In particular, the spring 30 pushes the abutting surface 27 provided on the sleeve 17 into contact with the upper surface 32 of the tubular element 19.

Subsequently, the supporting means moves the crown cap 601 towards the punch 616 until the surface 6 of the bottom wall 3 is brought into contact with the abutting end 18 of the sleeve 17. In this way, between the punch 616 and the crown cap 601 a forming chamber 629 is defined, shown in Figure 23, which forming chamber 629 is delimited above by the tubular element 19 and by the central forming element 620, delimited below by the bottom wall 3 of the crown cap 601 and delimited laterally by the abutting end 18 of the sleeve 17. The spring 30, which acts on the sleeve 17, presses the sleeve 17 against the bottom wall 3 of the crown cap 601 to prevent the plastics from escaping from the forming chamber 29. In the meanwhile the dose 15 starts to be shaped and to fill the forming chamber 629.

The crown cap 601 is pushed further by the supporting means to the tubular element 19 and the central forming element 20. The sleeve 17 moves in the moulding direction F, together with the crown cap 601, thus compressing the spring 30, while the tubular element 19 and the central forming element 20 remain in a fixed position. The dimensions of the forming chamber 629 are thus progressively reduced and the dose 15 is compressed further, which dose 15, as shown in Figure 23, fills the whole forming chamber 629, flowing along the channels 621 obtained on the forming surface 24 of the central forming element 620 and moving towards the abutting end 18 of the sleeve 17.

The channels 621, also owing to the shape thereof, promote flowing of plastics to the abutting end 18 of the sleeve 17 so as to improve filling of the groove 22.

The sleeve 17, pushed by the supporting means that supports the crown cap 601, continues to rise up to the configuration in Figure 23, in which the tubular element 19, the central forming element 20 and the abutting end 18 of the sleeve 17 are arranged in relation to the bottom wall 3 of the crown cap 601 in such a way as to define the final shape of the liner 607.

In this configuration, the plastics have completely filled the channels 621, which have given rise to the ribs 610, and the plastics have then reached the groove 22, in which the annular zone of the liner 607 is formed. The punch 616 remains in contact with the liner 607 for a period of time that is sufficient to ensure the stabilization and cooling thereof thanks to the cooling fluid circulating inside the circuit 28. Subsequently, the crown cap 601 is moved away from the punch 616 and is removed from the supporting means in the known manner.

Forming means that is completely similar to the one shown in Figures 21 to 23 can also be used to form a liner 507 of the type shown in Figures 17 and 18. In this case, the central zone 625 of the central forming element 23 has a depth that is the same as that of the channels 621; so as to obtain a liner 507 having an internal region 509 and a plurality of ribs 510 of equal thickness.

In an embodiment that is not shown and that is not part of the present invention, the channels provided on the punch to receive the plastics that form the connecting path means can be obtained directly on the cap rather than on the punch.

In other words, the cap can be provided with a plurality of grooves or furrows suitable for being filled by the plastics that form the liner during moulding of the latter. These furrows can be obtained during forming of the cap. If, for example, the cap is obtained by injection or compression-moulding of plastics, it is possible to use a punch having a forming surface suitable for shaping the bottom wall of the cap, the aforementioned forming surface being provided with a plurality of protuberances that give rise to the furrows on the bottom wall of the cap.

If the connecting path means is formed in the furrows of the cap, the liner can be delimited, on the side opposite the bottom wall of the cap, by a substantially flat surface. This means that the liner can be formed by using a punch of known type, i.e. a punch delimited, in a central portion thereof, by a substantially smooth surface.

In another embodiment, the liner can be formed in a suitable die that is part of the forming means, rather than directly in the cap, and can be subsequently applied to the inside of the cap.

The moulding direction F can be not only vertical, as shown in Figures 8 to 15, 21 to 23, but also horizontal or tilted.

It is furthermore possible to provide a configuration that is reversed in relation to the aforementioned Figures, i.e. a configuration in which the punch is arranged below the supporting means of the cap.

Lastly, rather than keeping the internal element in a fixed position and moving the tubular element and the sleeve in relation to the internal element, it is possible to move the internal element and keep the sleeve and the tubular element stationary.

## Claims

1. Cap for closing a container, comprising a liner (7; 107; 207; 307; 407) adhering to a wall (3) of said cap (1), said liner (7; 107; 207; 307; 407) comprising an annular zone (8; 208; 308) for engaging an edge (14) of said container, an internal region (9) arranged inside said annular zone (8; 208; 308) and connecting path means (10; 110) comprising at least a bridge element (10; 110) that connects said internal region (9) to said annular zone (8; 208; 308), **characterized in that** said liner (7; 107; 207; 307; 407) has at least a through opening (12) defined between said internal region (9), said annular zone (8; 208; 308) and said at least a bridge element (10; 110) .

2. Cap according to claim 1, wherein said connecting path means (10; 110) extends radially between said internal region (9) and said annular zone (8; 208; 308).

3. Cap according to any preceding claim, wherein said annular zone (8) has a first thickness (S1) that is greater than a second thickness (S2) of said internal region (9).

4. Cap according to claim 3, wherein said at least a bridge element (10) has a third thickness (S3) that is less than said first thickness (S1).

5. Cap according to claim 4, wherein said third thickness (S3) is less than said second thickness (S2).

6. Cap according to any preceding claim, wherein said annular zone (8; 208; 308) has an annulus-like plan shape.

7. Cap according to any preceding claim, wherein said annular zone (8) has a substantially rectangular cross section.

8. Cap according to any one of claims 1 to 7, wherein from said annular zone (208; 308) a lip (40; 41) protrudes that is suitable for sealingly engaging said edge (14) laterally:

9. Cap according to claim 8, wherein from said annular zone a further lip (41) protrudes, defining with said lip (41) a notch (42) for receiving said edge (14).

10. Cap according to any preceding claim, wherein said internal region (9) is arranged substantially in the centre of said annular zone (8; 208; 308).

11. Cap according to any preceding claim, wherein said internal region (9) has a substantially circular plan shape.

12. Cap according to any preceding claim, wherein said connecting path means comprises a plurality of bridge elements (10; 110) that are equidistant from one another.

13. Cap according to any preceding claim, wherein said annular zone (8) is provided with at least an appendage (31) protruding towards said internal region (9).

14. Cap according to claim 13, as appended to claim 12, wherein said at least an appendage (31) is arranged in an intermediate position between two adjacent bridge elements of said plurality of bridge elements (10).

15. Cap according to any preceding claim, wherein said wall is an end wall (3) from which a side wall (4) extends provided with fixing means for fixing to said container.

16. Cap according to any preceding claim, wherein said wall (3) is provided with furrow means wherein said connecting path means is housed.

17. Apparatus comprising forming means (16; 116) for interacting with a surface (6) to form a liner (7; 107; 207; 307; 407) adjacent to said surface (6) from a dose (15) of plastics, said forming means (16; 116) comprising an abutting sleeve (17; 117) suitable for contacting said surface (6) to peripherally delimit a forming chamber (29) for forming said dose (15) and internal forming means (19, 23; 119, 123) arranged within said abutting sleeve (17; 117) for internally shaping said liner (7; 107; 207; 307; 407), **characterized in that** said internal forming means (19, 23; 119, 123) comprises a tubular element (19; 119) having a forming surface provided with channelling means (21) intended to promote flowing from a starting point in the center to a final print in an annular zone of said plastics being formed and a central forming element (23; 123) surrounded by said tubular element (19; 119), said tubular element (19; 119) and said central forming element (23; 123) being reciprocally movable so as to temporarily define inside said tubular element (19; 119) a cavity (25) of dimensions such as to house said dose (15) before compression, said tubular element (19; 119) having abutting parts that can contact the surface (6) to form at least a through opening in the liner.

18. Apparatus according to claim 17, wherein said channelling means (21) leads into groove means (22), said groove means (22) being arranged outside said channelling means (21) for forming an annular zone (8; 208; 308) of said liner (7; 107; 207; 307; 407).

19. Apparatus according to claim 18, wherein said groove means comprises a groove (22) having a substantially circular extent.

20. Apparatus according to claim 19, wherein said channelling means (21) extends radially in a region of said internal forming means (19, 23; 119, 123), which region is externally delimited by said groove (22).

21. Apparatus according to any one of claims 18 to 20, wherein said abutting sleeve is provided with seat means communicating with said groove means to receive said plastics coming from said groove means.

22. Apparatus according to claim 21, wherein said seat means projects inside said groove means (22).

23. Apparatus according to claim 21, or 22, and furthermore comprising venting means arranged near said seat means to enable the air contained in said seat means to escape into an external environment.

24. Apparatus according to claim 23, wherein said venting means comprises at least an insert in porous material.

25. Apparatus according to any one of claims 17 to 24, wherein said central forming element (23; 123) and said abutting sleeve (17; 117) are reciprocally movable.

26. Apparatus according to any one of claims 17 to 25, wherein said abutting sleeve (17; 117) comprises an abutting end (18) suitable for abutting on said surface (6) to delimit peripherally said forming chamber (29), said abutting end (18) having a substantially circular plan shape.

27. Apparatus according to any one of claims 18 to 24, wherein said groove means (22) is defined between said abutting sleeve (17; 117) and said tubular element (19; 119).

28. Apparatus according to any one of claims 17 to 27, wherein said cavity (25) is arranged in a position substantially central in said forming chamber (29).

29. Apparatus according to any one of claims 17 to 28, wherein said abutting sleeve (17) is coupled with said tubular element (19).

30. Apparatus according to any one of claims 17 to 28, wherein said abutting sleeve (117) is movable in relation to said tubular element (119).

31. Apparatus according to any one of claims 17 to 30, and furthermore comprising elastic means (30; 43, 44) for keeping said abutting sleeve (17; 117) pressed against said surface (6).

32. Apparatus according to claim 31, as appended to claim 30, wherein said elastic means (43, 44) comprises first elastic means (43) acting on said abutting sleeve (117) and second elastic means (44) acting on said tubular element (119).

33. Apparatus according to claim 32, wherein said first elastic means (43) has lesser rigidity than said second elastic means (44).

34. Apparatus according to any one of claims 17 to 33, and comprising intermittently pressurising means for periodically pressurising a cooling fluid circulating in a cooling circuit (46, 47, 50, 51, 54) for cooling said internal forming means (119, 123) and/or for cooling said abutting sleeve (17; 117).

35. Apparatus according to claim 34, wherein said intermittently pressurising means comprises said internal forming means (119, 123).

36. Apparatus according to claim 34 or 35, wherein said cooling circuit (46, 47, 50, 51, 54) comprises an accumulating zone (47) delimited by a first wall (48) obtained on a first component (52) of said internal forming means (119, 123) and by a second wall (49) obtained on a second component (123) of said internal forming means (119, 123), said first component (52) and said second component (123) being reciprocally movable.

37. Apparatus according to claim 36, wherein said first wall (48) and said second wall (49) extend transversely to a movement direction (F) along which said first component (52) and said second component (123) are movable in relation to one another.

38. Apparatus according to claim 37, wherein said first wall (48) and said second wall (49) are orthogonal to said movement direction (F).

39. Apparatus according to any one of claims 17 to 38, wherein said internal forming means (23; 123) and said abutting sleeve (17; 117) define punch means (16; 116) suitable for engaging a cap (1) on which said surface (6) is obtained to form said liner (7; 107; 207; 307; 407) adhering to said cap (1).

40. Apparatus according to any one of claims 17 to 39, and furthermore comprising an extruding device for dispensing said dose (15).

41. Apparatus according to any one of claims 17 to 40, and furthermore comprising an injection device for dispensing said dose (15).

42. Apparatus according to any one of claims 17 to 41, wherein said internal forming means (23; 123) and said abutting sleeve (17; 117) are arranged on the same side of said surface (6).

## Patentansprüche

1. Kappe zum Verschließen eines Behälters mit einer Einlage (7; 107; 207; 307; 407), die an einer Wand (3) der Kappe (1) haftet, wobei die Einlage (7; 107; 207; 307; 407) eine ringförmige Zone (8; 208; 308) aufweist, um mit einer Kante (14) des Behälters zusammenzuwirken, einen inneren Bereich (9) aufweist, der innerhalb der ringförmigen Zone (8; 208; 308) angeordnet ist und Verbindungspfadmittel (10; 110) mit zumindest einem Brückenelement (10; 110) aufweist, das den inneren Bereich (9) mit der ringförmigen Zone (8; 208; 308) verbindet, **dadurch gekennzeichnet, dass** die Einlage (7; 107; 207; 307; 407) zumindest eine Durchgangsöffnung (12) aufweist, die zwischen dem inneren Bereich (9), der ringförmigen Zone (8; 208; 308) und dem zumindest einen Brückenelement (10; 110) definiert ist.

2. Kappe nach Anspruch 1, wobei das Verbindungspfadmittel (10; 110) sich radial zwischen dem inneren Bereich (9) und der ringförmigen Zone (8; 208; 308) erstreckt.

3. Kappe nach einem vorhergehenden Anspruch 1, wobei die ringförmige Zone (8) eine erste Dicke (S1) besitzt, die größer ist als eine zweite Dicke (S2) des inneren Bereichs (9).

4. Kappe nach Anspruch 3, wobei zumindest ein Brückenelement (10) eine dritte Dicke (S3) besitzt, die geringer ist als die erste Dicke (S1).

5. Kappe nach Anspruch 4, wobei die dritte Dicke (S3) geringer ist als die zweite Dicke (S2).

6. Kappe nach einem vorhergehenden Anspruch, wobei die ringförmige Zone (8; 208; 308) eine ringförmige ebene Form aufweist.

7. Kappe nach einem vorhergehenden Anspruch, wobei die ringförmige Zone (8) einen im Wesentlichen rechteckigen Querschnitt besitzt.

8. Kappe nach einem der Ansprüche 1 bis 7, wobei von der ringförmigen Zone (208; 308) eine Lippe (40; 41) hervorspringt, die dazu geeignet ist, mit der Kante (14) seitlich abdichtend zusammenzuwirken.

9. Kappe nach Anspruch 8, wobei von der ringförmigen Zone eine weitere Lippe (41) hervorspringt, die mit der Lippe (41) eine Nut (42) zur Aufnahme der Kante (14) bildet.

10. Kappe nach einem vorhergehenden Anspruch 1, wobei der innere Bereich (9) im Wesentlichen in der Mitte der ringförmigen Zone (8; 208, 308) angeordnet ist.

11. Kappe nach einem vorhergehenden Anspruch, wobei der innere Bereich (9) eine im Wesentlichen kreisförmige ebene Form besitzt.

12. Kappe nach einem vorhergehenden Anspruch, wobei das Verbindungspfadmittel eine Vielzahl von Brückenelementen (10; 110) aufweist, die in gleichen Abständen zueinander liegen.

13. Kappe nach einem vorhergehenden Anspruch, wobei die ringförmige Zone (8) zumindest eine Anfügung (31) aufweist, die in Richtung des inneren Bereichs (9) hervorspringt.

14. Kappe nach Anspruch 13, abhängig von Anspruch 12, wobei die zumindest eine Anfügung (31) in einer mittleren Position zwischen zwei benachbarten Brückenelementen der Vielzahl von Brückenelementen (10) angeordnet ist.

15. Kappe nach einem vorhergehenden Anspruch, wobei die Wand eine Endwand (3) ist, von der sich eine Seitenwand (4) erstreckt und mit Befestigungsmitteln zum Befestigen an dem Behälter versehen ist.

16. Kappe nach einem vorhergehenden Anspruch, wobei die Wand (3) mit einem Rillenmittel versehen ist, in dem das Verbindungspfadmittel aufgenommen ist.

17. Vorrichtung mit einem Ausformungsmittel (16; 116) zum Zusammenwirken mit einer Oberfläche (6), um eine Einlage (7; 107; 207; 307; 407) benachbart zu der Oberfläche (6) aus einer Menge (15) von Kunststoff zu bilden, wobei das Ausbildungsmittel (16; 116) eine Anschlagbuchse (17; 117) aufweist, die zum Berühren der Oberfläche (6) geeignet ist, um eine Ausbildungskammer (29) zum Bilden der Menge (15) peripher zu begrenzen, und ein inneres Ausformungsmittel (19, 23; 119; 123) aufweist, das innerhalb der Anschlagbuchse (17; 117) zum inneren Formen der Einlage (7; 107; 207; 307; 407) angeordnet ist, **dadurch gekennzeichnet, dass** das innere Ausformungsmittel (19, 23; 119; 123) ein rohrförmiges Element (19; 119) aufweist, das eine Ausformungsfläche besitzt, die mit Kanalmitteln (21) versehen ist, die den Fluss von einem Startpunkt in der Mitte zu einem Endpunkt in einer ringförmigen Zone des Kunststoffs, der ausgeformt werden soll, unterstützen sollen, und ein mittleres Ausformungselement (23; 123) aufweist, das von dem rohrförmigen Element (19; 119) umgeben ist, wobei das rohrförmige Element (19; 119) und das mittlere Ausformungselement (23; 123) reziprok bewegbar sind, so dass innerhalb des rohrförmigen Elements (19; 119) temporär ein Hohlraum (25) gebildet wird mit Abmessungen, um die Menge (15) vor ihrer Kompression aufzunehmen, wobei das rohrförmige Element (19; 119) Anschlagteile aufweist, die die Fläche (6) kontaktieren können, um zumindest eine Durchgangsöffnung in der Einlage auszubilden.

18. Vorrichtung nach Anspruch 17, wobei das Kanalmittel (21) in ein Nutmittel (22) führt, wobei das Nutmittel (22) außerhalb des Kanalmittels (21) zum Ausbilden einer ringförmigen Zone (8; 208; 308) der Einlage (7; 107; 207; 307; 407) angeordnet ist.

19. Vorrichtung nach Anspruch 18, wobei das Nutmittel eine Nut (22) mit einer im Wesentlichen kreisförmigen Erstreckung aufweist.

20. Vorrichtung nach Anspruch 19, wobei das Kanalmittel (21) sich radial in einem Bereich des inneren Ausformungsmittels (19, 23; 119, 123) erstreckt, wobei der Bereich außen durch die Nut (22) begrenzt ist.

21. Vorrichtung nach einem der Ansprüche 18 bis 20, wobei die Anschlagbuchse mit einem Sitzmittel versehen ist, das mit dem Nutmittel in Verbindung steht, um den Kunststoff aufzunehmen, der von dem Nutmittel kommt.

22. Vorrichtung nach Anspruch 21, wobei das Sitzmittel sich in das Nutmittel (22) erstreckt.

23. Vorrichtung nach Anspruch 21 oder 22 und ferner mit einem Lüftungsmittel, das nahe dem Sitzmittel angeordnet ist, um zu ermöglichen, dass Luft, die in dem Sitzmittel enthalten ist, in eine äußere Umgebung entweichen kann.

24. Vorrichtung nach Anspruch 23, wobei das Lüftungsmittel zumindest einen Einsatz aus porösem Material aufweist.

25. Vorrichtung nach einem der Ansprüche 17 bis 24, wobei das mittlere Ausformungselement (23; 123) und die Anschlagbuchse (17; 117) reziprok bewegbar sind.

26. Vorrichtung nach einem der Ansprüche 17 bis 25, wobei die Anschlagbuchse (17; 117) ein Anschlagende (18) aufweist, das geeignet ist, an der Oberfläche (6) anzuschlagen, um die Ausformungskammer (29) peripher zu begrenzen, wobei das Anschlagende (18) eine im Wesentlichen kreisförmige ebene Form besitzt.

27. Vorrichtung nach einem der Ansprüche 18 bis 24, wobei das Nutmittel (22) zwischen der Anschlagbuchse (17; 117) und dem rohrförmigen Element (19; 119) ausgebildet ist.

28. Vorrichtung nach einem der Ansprüche 17 bis 27, wobei der Hohlraum (25) in einer Position liegt, die im Wesentlichen zentral in der Ausformungskammer (29) liegt.

29. Vorrichtung nach einem der Ansprüche 17 bis 28, wobei die Anschlagbuchse (17) mit dem rohrförmigen Element (19) gekoppelt ist.

30. Vorrichtung nach einem der Ansprüche 17 bis 28, wobei die Anschlagbuchse (117) in Bezug auf das rohrförmige Element (119) bewegbar ist.

31. Vorrichtung nach einem der Ansprüche 17 bis 30 und ferner mit einem elastischen Mittel (30; 43, 44), um die Anschlagbuchse (17; 117) gegen die Oberfläche (6) gedrückt zu halten.

32. Vorrichtung nach Anspruch 31 und abhängig von Anspruch 30, wobei das elastische Mittel (43, 44) ein erstes elastisches Mittel (43), das gegen die Anschlagbuchse (117) wirkt, und ein zweites elastisches Mittel (44) aufweist, das auf das rohrförmige Element (119) wirkt.

33. Vorrichtung nach Anspruch 32, wobei das erste elastische Mittel (43) eine geringere Festigkeit als das zweite elastische Mittel (44) besitzt.

34. Vorrichtung nach einem der Ansprüche 17 bis 33 und ferner mit einem periodisch druckbeaufschlagenden Mittel zur periodischen Druckbeaufschlagung eines Kühlmittels, das in einem Kühlkreislauf (46, 47, 50, 51, 54) zirkuliert, um das innere Ausformungsmittel (119, 123) zu kühlen und/oder um die Anschlagbuchse (17; 117) zu kühlen.

35. Vorrichtung nach Anspruch 34, wobei das periodisch druckbeaufschlagende Mittel das innere Ausformungsmittel (119, 123) aufweist.

36. Vorrichtung nach Anspruch 34 oder 35, wobei der Kühlkreis (46, 47, 50, 51, 54) eine Anreicherungszone (47) aufweist, die von einer ersten Wand (48), die auf einer ersten Komponente (52) des inneren Ausformungsmittels (119, 123) erhalten wird, und von einer zweiten Wand (49) begrenzt wird, die auf einer zweiten Komponente (123) des inneren Ausformungsmittels (119, 123) erhalten wird, wobei die erste Komponente (52) und die zweite Komponente (123) reziprok bewegbar sind.

37. Vorrichtung nach Anspruch 36, wobei die erste Wand (48) und die zweite Wand (49) sich quer zu einer Bewegungsrichtung (F) erstrecken, entlang der die erste Komponente (52) und die zweite Komponente (123) in Bezug zueinander bewegbar sind.

38. Vorrichtung nach Anspruch 37, wobei die erste Wand (48) und die zweite Wand (49) orthogonal zu der Bewegungsrichtung (F) sind.

39. Vorrichtung nach einem der Ansprüche 17 bis 38, wobei das innere Ausformungsmittel (23; 123) und die Anschlagbuchse (17; 117) ein Stanzmittel (16; 116) bilden, das geeignet ist, um mit einer Kappe (1) zusammenzuwirken, auf der die Oberfläche (6) erhalten wird, um die Einlage (7; 107; 207; 307; 407) zu bilden, die an der Kappe (1) haftet.

40. Vorrichtung nach einem der Ansprüche 17 bis 39 und ferner mit einem Extrusionsgerät zum Ausbringen der Menge (15).

41. Vorrichtung nach einem der Ansprüche 17 bis 40 und ferner mit einem Spritzgerät zum Ausbringen der Menge (15).

42. Vorrichtung nach einem der Ansprüche 17 bis 41, wobei das innere Ausformungsmittel (23; 123) und die Anschlagbuchse (17; 117) auf der gleichen Seite der Oberfläche (6) angeordnet sind.

## Revendications

1. Capsule pour la fermeture d'un récipient, comprenant un revêtement intérieur (7 ; 107 ; 207 ; 307 ; 407) adhérant à une paroi (3) de ladite capsule (1), ledit revêtement intérieur (7 ; 107 ; 207 ; 307 ; 407) comprenant une zone annulaire (8 ; 208 ; 308) pour épouser un bord (14) dudit récipient, une zone interne (9) située à l'intérieur de ladite zone annulaire (8 ; 208 ; 308) et des moyens de trajet de jonction (10 ; 110 ) comprenant au moins un élément de pontet (10 ; 110) qui relie ladite zone interne (9) à ladite zone annulaire (8 ; 208 ; 308), ***caractérisée en ce que*** ledit revêtement intérieur (7 ; 107 ; 207 ; 307 ; 407) possède au moins une ouverture traversante (12) définie entre ladite zone interne (9), ladite zone annulaire (8 ; 208 ; 308) et ledit au moins un élément de pontet (10 ; 110).

2. Capsule selon la revendication 1, dans lequel lesdits moyens de trajet de jonction (10 ; 110) s'étendent radialement entre ladite zone interne (9) et ladite zone annulaire (8 ; 208 ; 308).

3. Capsule selon l'une quelconque des revendications précédentes, dans laquelle ladite zone annulaire (8) possède une première épaisseur (S1) qui est supérieure à une deuxième épaisseur (S2) de ladite zone interne (9).

4. Capsule selon la revendication 3, dans laquelle ledit au moins un élément de pontet (10) possède une troisième épaisseur (S3) qui est inférieure à ladite première épaisseur (S1).

5. Capsule selon la revendication 4, dans laquelle ladite troisième épaisseur (S3) est inférieure à ladite deuxième épaisseur (S2).

6. Capsule selon l'une quelconque des revendications précédentes, dans laquelle ladite zone annulaire (8 ; 208 ; 308) présente, en plan, une forme annulaire.

7. Capsule selon l'une quelconque des revendications précédentes, dans laquelle ladite zone annulaire (8) a une section transversale sensiblement rectangulaire.

8. Capsule selon l'une quelconque des revendications 1 à 7, dans laquelle une lèvre (40 ; 41) fait saillie de ladite zone annulaire (208 ; 308), lèvre qui est apte à s'engager de manière étanche latéralement avec ledit bord (14).

9. Capsule selon la revendication 8, dans laquelle une lèvre supplémentaire (41) fait saillie, définissant avec ladite lèvre (41) une encoche (42) pour recevoir ledit bord (14).

10. Capsule selon l'une quelconque des revendications précédentes, dans laquelle ladite zone interne (9) est située sensiblement au centre de ladite zone annulaire (8 ; 208 ; 308).

11. Capsule selon l'une quelconque des revendications précédentes, dans laquelle ladite zone interne (9) présente, en plan, une forme sensiblement circulaire.

12. Capsule selon l'une quelconque des revendications précédentes, dans laquelle lesdits moyens de trajet de jonction comprennent une pluralité d'éléments de pontet (10 ; 110) qui sont équidistants entre eux.

13. Capsule selon l'une quelconque des revendications précédentes, dans laquelle ladite zone annulaire (8) est munie d'au moins un appendice (31) saillant en direction de ladite zone interne (9).

14. Capsule selon la revendication 13, telle que dépendante de la revendication 12, dans laquelle ledit au moins un appendice (31) est placé dans une position intermédiaire entre deux éléments de pontet adjacents de ladite pluralité d'éléments (10) de pontet.

15. Capsule selon l'une quelconque des revendications précédentes, dans laquelle ladite paroi est une paroi d'extrémité (3) d'où part une paroi latérale (4) munie de moyens de fixation pour une fixation sur ledit récipient.

16. Capsule selon l'une quelconque des revendications précédentes, dans laquelle ladite paroi (3) est munie de moyens de sillons dans lesquels lesdits moyens de trajet de jonction sont reçus.

17. Dispositif comprenant des moyens de formage (16 ; 116) destinés à interagir avec une surface (6) pour former un revêtement intérieur (7 ; 107 ; 207 ; 307 ; 407) adjacent à ladite surface (6) à partir d'une dose (15) de matière plastique, lesdits moyens de formage (16 ; 116) comprenant un manchon d'aboutement (17 ; 117) apte à être en contact avec ladite surface (6) pour délimiter périphériquement une chambre de formage (29) pour former ladite dose (15) et des moyens de formage internes (19, 23 ; 119, 123) placés à l'intérieur dudit manchon d'aboutement (17 ; 117) destinés à façonner intérieurement ledit revêtement intérieur (7 ; 107 ; 207 ; 307 ; 407), ***caractérisé en ce que*** lesdits moyens de formage internes (19, 23 ; 119, 123) comprennent un élément tubulaire (19 ; 119) ayant une surface de formage munie de moyens de canalisation (21) destinés à aider l'écoulement, à partir d'un point de départ situé au centre jusqu'à un point final dans une zone annulaire, de ladite matière plastique en formage, et un élément de formage central (23 ; 123) entouré par ledit élément tubulaire (19 ; 119), ledit élément tubulaire (19 ; 119) et ledit élément de formage central (23 ; 123) étant mobiles l'un par rapport à l'autre de manière à définir temporairement à l'intérieur dudit élément tubulaire (19 ; 119) une cavité (25) de dimensions adaptées à accommoder ladite dose (15) avant compression, ledit élément tubulaire (19 ; 119) ayant des parties d'aboutement qui peuvent entrer en contact avec la surface (6) pour former au moins une ouverture traversante dans le revêtement intérieur.

18. Dispositif selon la revendication 17, dans lequel lesdits moyens de canalisation (21) aboutissent dans des moyens de rainure (22), lesdits moyens de rainure (22) étant agencés à l'extérieur desdits moyens de canalisation (21) pour former une zone annulaire (8 ; 208 ; 308) dudit revêtement intérieur (7 ; 107 ; 207 ; 307 ; 407).

19. Dispositif selon la revendication 18, dans lequel lesdits moyens de rainure (22) comprennent une rainure (22) ayant une étendue sensiblement circulaire.

20. Dispositif selon la revendication 19, dans lequel lesdits moyens de canalisation (21) s'étendent radialement dans une zone desdits moyens de formage internes (19, 23 ; 119, 123), zone qui est délimitée extérieurement par ladite rainure (22).

21. Dispositif selon l'une quelconque des revendications 18 à 20, dans lequel ledit manchon d'aboutement est muni de moyens de siège communiquant avec lesdits moyens de rainure pour recevoir ladite matière plastique venant desdits moyens de rainure.

22. Dispositif selon la revendication 21, dans lequel lesdits moyens de siège font saillie à l'intérieur desdits moyens de rainure (22).

23. Dispositif selon la revendication 21 ou 22, et comprenant en plus des moyens d'évent agencés à proximité desdits moyens de siège pour permettre à l'air contenu dans lesdits moyens de siège de s'échapper dans l'environnement extérieur.

24. Dispositif selon la revendication 23, dans lequel lesdits moyens d'évent comprennent au moins un insert en matériau poreux.

25. Dispositif selon l'une quelconque des revendications 17 à 24, dans lequel ledit élément de formage central (23 ; 123) et ledit manchon d'aboutement (17 ; 117) sont mobiles l'un par rapport à l'autre.

26. Dispositif selon l'une quelconque des revendications 17 à 25, dans lequel ledit manchon d'aboutement (17 ; 117) comprend une extrémité d'aboutement (18) apte à un aboutement sur ladite surface (6) pour délimiter périphériquement ladite chambre de formage (29), ladite extrémité d'aboutement (18) ayant, en plan, une forme sensiblement circulaire.

27. Dispositif selon l'une quelconque des revendications 18 à 24, dans lequel lesdits moyens de rainure (22) sont définis entre ledit manchon d'aboutement (17 ; 117) et ledit élément tubulaire (19 ; 119).

28. Dispositif selon l'une quelconque des revendications 17 à 27, dans lequel ladite cavité (25) est située dans une position sensiblement centrale dans ladite chambre de formage (29).

29. Dispositif selon l'une quelconque des revendications 17 à 28, dans lequel ledit manchon d'aboutement (17) est couplé audit élément tubulaire (19).

30. Dispositif selon l'une quelconque des revendications 17 à 28, dans lequel ledit manchon d'aboutement (117) est mobile en relation avec ledit élément tubulaire (119).

31. Dispositif selon l'une quelconque des revendications 17 à 30, et comprenant en plus des moyens élastiques (30 ; 43, 44) pour maintenir ledit manchon d'aboutement (17 ; 117) pressé contre ladite surface (6).

32. Dispositif selon la revendication 31, telle que dépendante de la revendication 30, dans lequel lesdits moyens élastiques (43, 44) comprennent des premiers moyens élastiques (43) agissant sur ledit manchon d'aboutement (117) et des deuxièmes moyens élastiques (44) agissant sur ledit élément tubulaire (119).

33. Dispositif selon la revendication 32, dans lequel lesdits premiers moyens élastiques (43) ont une rigidité inférieure auxdits deuxièmes moyens élastiques (44).

34. Dispositif selon l'une quelconque des revendications 17 à 33, et comprenant en plus des moyens de mise sous pression de manière intermittente, destinés à mettre périodiquement sous pression un fluide de refroidissement circulant dans un circuit de refroidissement (46, 47, 50, 51, 54) afin de refroidir lesdits moyens de formage internes (119, 123) et/ou de refroidir ledit manchon d'aboutement (17 ; 117).

35. Dispositif selon la revendication 34, dans lequel lesdits moyens de mise sous pression intermittente comprennent lesdits moyens de formage internes (119, 123).

36. Dispositif selon la revendication 34 ou 35, dans lequel ledit circuit de refroidissement (46, 47, 50, 51, 54) comprend une zone accumulatrice (47) délimitée par une première paroi (48) obtenue sur un premier composant (52) desdits moyens de formage internes (119, 123) et par une deuxième paroi (49) obtenue sur un deuxième composant (123) desdits moyens de formage internes (119, 123), ledit premier composant (52) et ledit deuxième composant (123) étant mobiles l'un par rapport à l'autre.

37. Dispositif selon la revendication 36, dans lequel ladite première paroi (48) et ladite deuxième paroi (49) s'étendent transversalement à une direction de déplacement (F) le long de laquelle ledit premier composant (52) et ledit deuxième composant (123) sont mobiles l'un par rapport à l'autre.

38. Dispositif selon la revendication 37, dans lequel ladite première paroi (48) et ladite deuxième paroi (49) sont orthogonales à ladite direction de déplacement (F).

39. Dispositif selon l'une quelconque des revendications 17 à 38, dans lequel lesdits moyens de formage internes (23 ; 123) et ledit manchon (17 ; 117) d'aboutement définissent des moyens de poinçon (16 ; 116) aptes à engager une capsule (1) sur laquelle ladite surface (6) est obtenue pour former ledit revêtement intérieur (7 ; 107 ; 207 ; 307 ; 407) adhérant à ladite capsule (1).

40. Dispositif selon l'une quelconque des revendications 17 à 39, et comprenant en plus un dispositif extrudeur pour fournir ladite dose (15).

41. Dispositif selon l'une quelconque des revendications 17 à 40, et comprenant de plus un dispositif d'injection pour fournir ladite dose (15).

42. Dispositif selon l'une quelconque des revendications 17 à 41, dans lequel lesdits moyens de formage internes (23 ; 123) et ledit manchon (17 ; 117) d'aboutement sont placés du même côté de ladite surface (6).
